# EUROPÄISCHE PATENTSCHRIFT

(11) **EP 2 827 047 B1**
(45) Veröffentlichungstag und Bekanntmachung des Hinweises auf die Patenterteilung: **18.05.2016**
(21) Anmeldenummer: 14176901.8
(22) Anmeldetag: 14.07.2014
(51) Int. Cl.: F21S 8/06, B60M 1/12, B60M 1/20, E01F 9/00, F21S 8/08, F21V 21/008, G08G 1/095, F21W 131/103

(54) **Beleuchtungsanlage zur Markierung eines Fahrstreifens einer Fahrbahn**
Illumination device for marking a lane of a roadway
Installation d'éclairage destiné à marquer une voie de circulation d'une chaussée

(30) Priorität: 16.07.2013 DE 102013213918
(43) Veröffentlichungstag der Anmeldung: 21.01.2015
(73) Patentinhaber: Siemens Aktiengesellschaft, 80333 München (DE)
(72) Erfinder: Birkner, Martin, 80333 München (DE); Gräbner, Oliver, 85579 Neubiberg (DE); Heilmann, Kathrin, 81667 München (DE); Lehmann, Michael, 91054 Erlangen (DE); Pfeiffer, Christian, 91088 Bubenreuth (DE); Sommer, Holger, 91086 Aurachtal (DE)

(56) Entgegenhaltungen:
- WO-A1-2012/033241
- WO-A2-2005/080689
- CN-A- 102 194 329
- FR-A- 1 047 134
- FR-A1- 2 564 647
- GB-A- 931 870
- US-A1- 2010 121 509
- US-A1- 2011 106 349

## Beschreibung

Die Erfindung betrifft eine Beleuchtungsanlage zur Markierung eines Fahrstreifens einer Fahrbahn nach dem Oberbegriff des Patentanspruches 1.

Zur Markierung von Fahrbahnen als Verkehrsflächen des Straßenverkehrs sind farbliche Kennzeichnungen auf deren Oberfläche bekannt. Fahrbahnmarkierungen dienen der Verkehrsführung, der Kennzeichnung verschiedener Verkehrsflächen und als Verkehrszeichen. Durch linienartige Markierungen werden Verkehrsflächen aufgeteilt und verschiedenen Verkehrsströmen oder Fahrtrichtungen zugeteilt. Anlagen des ruhenden Verkehrs werden mit Fahrbahnmarkierungen eindeutig vom fließenden Verkehr abgeteilt. Es lassen sich so auch Bauwerke des Straßenverkehrs, wie zum Beispiel Verkehrsinseln, kennzeichnen. Neben der Führung des Verkehrs kann die Fahrbahnmarkierung den Verkehrsteilnehmer auch vor Gefahren warnen oder Hinweise für die Wegweisung geben. Die Farbgebung der Markierung steht im Kontrast zur Fahrbahnfarbe und sorgt damit für eine optische Führung des Verkehrsteilnehmers bei Tag und bei Nacht. Spezielle Zusammensetzungen der Markierungsmaterialien ermöglichen eine ausreichende Sichtbarkeit bei schlechter Sicht, etwa bei nassen Fahrbahnen oder in Tunnelabschnitten. Unter den Markierungszeichen kommt den Längsmarkierungen besondere Bedeutung für die optische Führung der Verkehrsteilnehmer zu. Sie werden längs zur Fahrtrichtung angeordnet und gliedern den vorhandenen Straßenraum. Leit- oder Warnlinien werden als unterbrochene Linien, Fahrbahn- oder Fahrstreifenbegrenzungen als durchgehende Linien ausgeführt. Das Markierungsmaterial enthält retroreflektierende Glasperlen und Griffigkeitsmittel. Einer weit vorausschauenden Erkennbarkeit der Streckenführung derart markierter Fahrbahnen - etwa einer mehrstreifigen Autobahn - sind durch schlechte Sichtbedingungen, wie beispielsweise bei Nacht, bei Nässe und bei Schneebedeckung, Grenzen gesetzt.

Bekannt sind auch profilierte Markierungen mit quer oder längs zur Fahrtrichtung verlaufenden Stegen, die beim Überfahren mit einem Fahrzeug eine haptische oder akustische Warnwirkung erzeugen. Diese Warnwirkung setzt aber erst ein, wenn eine Fahrspurbegrenzung bereits überfahren wird, was aber durch eine wirksame Spurführung gerade vermieden werden soll.

Aus der DE-Produktschrift "Road Fire: Markierungsleuchten für den Straßenverkehr", herausgegeben 03/2000 von der Siemens AG unter der Bestell-Nr. A24705-X-A333-*-04, sind zur Fahrbahnmarkierung unterflur im Fahrbahnbelag angeordnete Leuchtmarkierungsknöpfe bekannt. Sie bestehen aus einem wasserdichten Gehäuse und einer optischen Einheit mit Lichtquelle und Glaslinsen. Für die Energie- und Datenversorgung sind an der optischen Einheit steckbare Versorgungsleitungen vorhanden. Das Licht ist in Hauptstrahlrichtung bei Gegenlicht am Tag auf eine Entfernung von mindestens 125 m sichtbar. Als Lichtfarbe kann durch den Einsatz den Einsatz von Leuchtdioden als Lichtquelle gelb, rot oder grün ausgewählt werden. Die Leuchtkraft kann durch Dimmen der Leuchtdioden an die Umgebungshelligkeit angepasst werden. Markierungsleuchten können beispielsweise bei wechselnder Fahrbahnbenutzung zur Markierung der Fahrspuren in Verschwenkungsbereichen eingesetzt werden. Weitere Einsatzfälle sind Spurwechselbereiche und Spurtrennungen auf Straßen mit hoher Verkehrsstärke, Fahrbahnmarkierungen an Tunnelein- und -ausfahrten, Verkehrsführung in komplexen Knotenpunkten oder Aufmerksamkeitszeichen und Warnung in Gefahrenbereichen.

Aus der Übersetzung DE 694 16 964 T2 ist eine Beleuchtungsanlage mit Leuchtvorrichtungen zur Straßenmarkierung bekannt. Eine Leuchtvorrichtung weist als Lichtquelle Leuchtdioden auf, die zumindest teilweise in ein durchscheinendes Festmaterial eingebettet sind. Das Festmaterial umfasst ein Haftmittel, beispielsweise ein Harz, zum mechanischen Schutz der Leuchtvorrichtung und Festpartikel, beispielsweise Glaskugeln, zur Brechung von Licht. Unterflur-Leuchtvorrichtungen müssen einerseits derart robust ausgeführt werden, dass sie einem Überrollen von Fahrzeugen sowie den Witterungseinflüssen im Freien standhalten können. Andererseits ist die Installation der in den Fahrbahnbelag einzubettenden Leuchtvorrichtungen sowie die Kabelverlegungsarbeiten für Energieversorgungs- und Datenübertragungsleitungen zeitintensiv und kostenaufwändig.

FR 2 564 647 A1, WO 2005/080689 A2, CN 102 194 329 A, und GB 931 870 A offenbaren Straßenbeleuchtungsanlagen und Signalleuchten, die zum Stand der Technik gehören. Der Erfindung liegt daher die Aufgabe zugrunde, eine gattungsgemäße Beleuchtungsanlage zur Markierung eines Fahrstreifens einer Fahrbahn bereitzustellen, die die bekannten Nachteile wenigstens teilweise überwindet, um die Betriebssicherheit beim Führen eines Fahrzeugs zu erhöhen.

Die Aufgabe wird gelöst durch eine Beleuchtungsanlage der eingangs genannten Art mit den im kennzeichnenden Teil des Patentanspruches 1 angegebenen Merkmalen. Es wird vorgeschlagen, die Vielzahl an Markierungsleuchten entlang einer oberhalb des Fahrstreifens verlaufenden Leitlinie anzuordnen und die Markierungsleuchten überkopf an einer fahrbahnseitigen Tragstruktur zu befestigen. Hierdurch wird eine optisch aktive Markierung des Fahrstreifens einer Fahrbahn bereitgestellt, die aufgrund ihrer Aufhängungshöhe eine große Sichtweite erlaubt. Derart angeordnete Markierungsleuchten sieht ein Fahrzeugführer unter einem anderen Blickwinkel als beispielsweise Fahrzeuge des Gegenverkehrs, weshalb deren blendendes Scheinwerferlicht die Erkennbarkeit der Markierungsleuchten kaum beeinträchtigt. Im Vergleich zu auf dem Fahrbahnbelag aufgebrachten oder in diesen eingebetteten Fahrbahnmarkierungen können erfindungsgemäß angeordnete Markierungsleuchten nicht durch Schnee bedeckt werden. Außerdem unterliegen sie mit Vorteil nicht den mechanischen Belastungen und dem damit einhergehenden Verschleiß überfahrbarer Fahrbahnmarkierungen. Die Leitlinie verläuft oberhalb des Lichtraumprofils der höchsten für die Fahrbahn zugelassenen Fahrzeugklasse. Die Tragstruktur kann durch vorhandene Bauwerke und/oder durch Masten mit Auslegern gebildet sein. Die Leitlinie verläuft beispielsweise über der Mitte oder über einer Begrenzung einer Fahrbahn oder eines Fahrstreifens, so dass ein Fahrzeugführer auch bei schlechten Lichtverhältnissen und widrigen Sichtbedingungen den Streckenverlauf der Fahrbahn bzw. des Fahrstreifens weit im Voraus erkennen kann. Dies erhöht den sicheren Betrieb von Fahrzeugen insbesondere auch auf Fahrbahnen ohne Geschwindigkeitsbegrenzungen.

In einer vorteilhaften Ausführungsform der erfindungsgemäßen Beleuchtungsanlage ist die Tragstruktur durch Ausleger einer Oberleitungsanlage zur Elektrifizierung des Fahrstreifens für Fahrzeuge mit Stromabnehmer gebildet, wobei die Markierungsleuchten zur Energieversorgung an die Oberleitungsanlage angeschlossen sind. Es sind zweipolige Oberleitungsanlagen mit als Hin- und Rückleiter ausgebildeten Fahrdrähten bekannt, die an neben der Fahrbahn aufgestellten Masten mit Auslegern aufgehängt sind. Es ist vorgesehen, insbesondere Fahrzeuge des Schwerlastverkehrs elektrisch oder dieselelek-trisch anzutreiben und über einen Stromabnehmer, dessen Schleifleisten die Fahrdrähte während der Fahrt kontaktieren, mit Traktionsenergie zu versorgen. In diesem Fall ist mit großem Vorteil keine Tragstruktur extra zu errichten, sondern es können die Ausleger der Oberleitungsanlage verwendet werden. Außerdem hat diese Ausführungsform den Vorteil, dass auch keine zusätzlichen Versorgungskabel für die Markierungsleuchten installiert werden müssen, weil diese über die Fahrleitungen - gegebenenfalls unter Zwischenschaltung von die Traktionsspannung in Versorgungsspannung umformende Bauteile - mit Energie versorgt werden können.

In einer bevorzugten Ausgestaltung der erfindungsgemäßen Beleuchtungsanlage ist jede der Markierungsleuchten zur Abgabe von Lichtsignalen in unterschiedlichen Farben und in unterschiedlichen Betriebsmodi ausgebildet und durch ein Steuergerät ansteuerbar. Auf diese Weise können einem Fahrzeugführer über die Orientierungshilfe zur Spurführung hinaus noch Verkehrsinformationen über den bevorstehenden Streckenabschnitt signalisiert werden. Die Verkehrsdaten zu einem Streckenabschnitt können - wie an sich bekannt - über streckenseitige Fahrzeugdetektoren an Messquerschnitten, über Meldungen mobiler Fahrzeuggeräte von den Streckenabschnitt aktuell befahrenden Fahrzeugen oder über klassische Fahrermeldungen erfasst und in einer Steuerungszentrale ausgewertet werden. Anhand von bekannten Verfahren zur Bestimmung des Verkehrszustandes aus erfassten Verkehrsdaten lässt sich beispielsweise unterscheiden zwischen
- frei fließendem Verkehr, der durch eine grüne Farbe signalisiert werden kann,
- dichtem Verkehr, der durch eine gelbe Farbe signalisiert werden kann,
- stockendem Verkehr oder Stau, der durch eine rote Farbe signalisiert werden kann, und
- einem Störfall, der durch eine rote Farbe in blinkendem Betriebsmodus signalisiert werden kann.

Die Markierungsleuchten auf Streckenabschnitten können hierdurch über ein zentrales Steuergerät Lichtsignale über den Verkehrszustand eines nachfolgenden Streckenabschnittes abgeben. Insbesondere bei Streckenabschnitten mit schlecht einsehbarer Streckenführung oder bei schlechten Sichtverhältnissen können auf diese Weise farbliche Lichtsignale abgeben werden, um Fahrzeugführer vor einem hinter einer Kurve oder einer Bergkuppe liegenden Unfall oder Stauende zu warnen.

Vorzugsweise sind das Steuergerät und die Markierungsleuchten der erfindungsgemäßen Beleuchtungsanlage dazu ausgebildet, über einen Längsleiter der Oberleitungsanlage miteinander zu kommunizieren. Längsleiter, wie Fahrdrähte oder Tragseile, dienen der Übertragung von Traktionsenergie von einem Unterwerk eines Speiseabschnittes der Oberleitungsanlage zum Fahrzeug und können mit Vorteil gleichzeitig als Datenübertagungsleitungen genutzt werden. Dieses an sich unter dem Begriff "Power Line Communication" bekannte Kommunikationsverfahren kann hier zur Übertragung von Meldetelegrammen zwischen Steuergerät und Markierungsleuchten genutzt werden. Dabei entfällt die aufwändige Installation von gesonderten Kommunikationsleitungen. Weiterhin kann eine funkbasierte Kommunikation, wie z.B. vom Mobilfunk oder von Sensornetzwerken bekannt, genutzt werden.

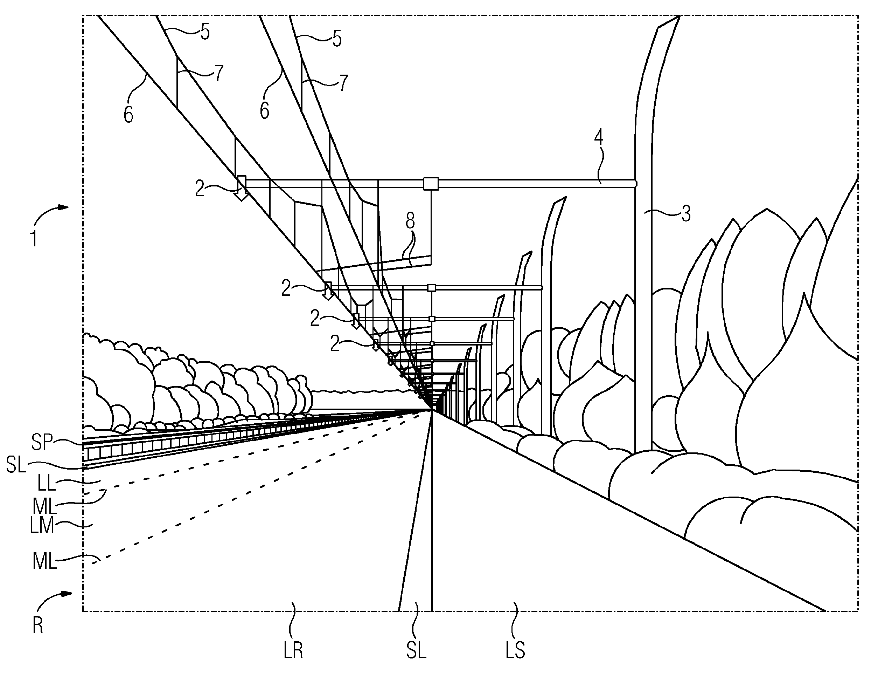

Weitere Eigenschaften und Vorteile ergeben sich aus nachfolgender Beschreibung eines Ausführungsbeispiels der Erfindung anhand der Zeichnung, in deren einziger Figur eine erfindungsgemäße Beleuchtungsanlage in perspektivischer Darstellung schematisch veranschaulicht ist.

Gemäß der Figur weist eine mehrspurige Fahrbahn R, beispielsweise eine Autobahn, einen rechten Fahrstreifen LR, einen mittleren Fahrstreifen LM und einen linken Fahrstreifen LL auf, die durch unterbrochene Markierungslinien ML voneinander abgeteilt sind. Neben dem rechten Fahrstreifen LR verläuft ein Seitenstreifen LS für Notfälle, neben dem linken Fahrstreifen LL verläuft ein Mittelstreifen mit einem als Schutzplanke SP ausgebildeten Rückhaltesystem zur Abgrenzung von einer Gegenfahrbahn, die von der Fahrbahn R jeweils durch eine durchgezogene Markierungslinie SL abgegrenzt sind.

Der Fahrbahn R ist eine Oberleitungsanlage zur Elektrifizierung des rechten Fahrstreifens LR zugeordnet. Die Oberleitungsanlage dient dazu, den rechten Fahrstreifen LR benutzenden Fahrzeugen, die mit einem Stromabnehmer ausgestattet sind, Traktionsenergie für einen elektrischen oder dieselelektrischen Antrieb bereitzustellen. Die Oberleitungsanlage umfasst seitlich der Fahrbahn R aufgestellte Masten 3, von welchen Ausleger 4 seitlich über die Fahrbahn R ragen. Die Ausleger 4 bilden Stützpunkte für zwei nebeneinander verlaufende Tragseile 5. Zwei Fahrdrähte 6 sind über Hänger 7 an den Tragseilen 5 etwa parallel zur Fahrbahn R befestigt und mittels Abstandshalter 8 etwa parallel zueinander gehalten. Die Fahrdrähte 6 dienen als Hin- und Rückleiter, die ein die Traktionsenergie bereitstellendes Unterwerk mit einem in Schleifkontakt mit den Fahrdrähten 6 stehenden Stromabnehmer eines Fahrzeugs elektrisch verbinden. Über den Stromabnehmer wird elektrische Energie in das Fahrzeug eingespeist beziehungsweise in die Oberleitungsanlage zurückgespeist. Die Oberleitungsanlage muss nicht auf den rechten Fahrstreifen LR begrenzt sein, sondern kann in weiteren Ausführungen auch für die anderen Fahrstreifen LM und LL installiert werden.

Neben den Markierungslinien ML und SL ist zur Orientierung von Fahrzeugführern erfindungsgemäß eine Beleuchtungsanlage 1 mit einer Vielzahl an Markierungsleuchten 2 installiert. Die Markierungsleuchten 2 sind überkopf an den Auslegern 4 der Oberleitungsanlage und damit entlang einer Leitlinie angeordnet, die oberhalb der Fahrbahn R verläuft. Diese Anordnung an gegen die Fahrtrichtung Licht ausstrahlenden Markierungsleuchten bildet damit eine weithin sichtbare Leitlinie, die auch bei schlechten Sicht- oder Wetterverhältnissen und bei schneebedeckter Fahrbahn R eine verlässliche Orientierungshilfe zur Spurführung von Fahrzeugen darstellt. Zur Energieversorgung der Markierungsleuchten 2 sind diese mit der Oberleitungsanlage verbunden, wobei die vom Unterwerk bereitgestellte Traktionsspannung gegebenenfalls durch Transformatoren oder weitere Steller und Wandler in die erforderliche Versorgungsspannung der Markierungsleuchten 2 umgeformt werden muss.

Die Markierungsleuchten 2 sind - analog zu bekannten Lichtsignalgebern an Knotenpunkten - zur Abgabe von Lichtsignalen in unterschiedlichen Farben, etwa rot, gelb oder grün, und in unterschiedlichen Betriebsmodi, etwa Dauer- oder Blinklicht, ausgebildet. Die Markierungsleuchten 2 und ein nicht dargestelltes Steuergerät kommunizieren dabei mittels "Power Line Communication" über die Längsleiter, sprich über die Tragseile 5 und/oder über die Fahrdrähte 6, der Oberleitungsanlage oder drahtlos mittels Funk. Damit sind bei einem elektrifizierten Fahrstreifen LR weder extra Energieversorgungsleitungen noch extra Datenübertragungsleitungen für die Markierungsleuchten 2 zu installieren. Das Steuergerät kann gemäß einer vorgegebenen Kodierung von Signalfarben und bezogen jeweils auf einen stromab liegenden Streckenabschnitt die Markierungsleuchten 2 ansteuern, beispielsweise "grün" für frei fließenden Verkehr, "gelb" für dichten Verkehr, "rot" für stockenden Verkehr oder Stau und "rot blinkend" für ein Störfall. Die Lichtsignale werden von Markierungsleuchten 2 auf einem den betreffenden Streckenabschnitt vorausgehenden Streckenabschnitt abgegeben. Die Verkehrsinformationen über den betreffenden Streckenabschnitt werden in an sich bekannter Weise, beispielsweise durch Verkehrsdatenerfassung und Verfahren zur Bestimmung des Verkehrszustands auf einem Streckenabschnitt, erfasst und dem Steuergerät zugeführt. Insbesondere bei Streckenabschnitten mit schlecht einsehbarer Streckenführung oder bei schlechten Sichtverhältnissen können auf diese Weise farbliche Lichtsignale abgeben werden, um Fahrzeugführer vor einem hinter einer Kurve oder einer Bergkuppe liegenden Unfall oder Stauende zu warnen.

## Patentansprüche

1. Beleuchtungsanlage (1) zur Markierung eines Fahrstreifens (LR) einer Fahrbahn (R), umfassend eine Vielzahl an entlang mindestens einer Leitlinie des Fahrstreifens (LR) angeordneten Markierungsleuchten (2), **dadurch gekennzeichnet, dass** die mindestens eine Leitlinie oberhalb des Fahrstreifens (LR) verläuft und die Markierungsleuchten (2) überkopf an einer fahrbahnseitigen Tragstruktur angeordnet sind.

2. Beleuchtungsanlage (1) nach Anspruch 1, wobei die Tragstruktur durch Ausleger (4) einer Oberleitungsanlage zur Elektrifizierung des Fahrstreifens (LR) für Fahrzeuge mit Stromabnehmer gebildet ist, wobei die Markierungsleuchten (2) zur Energieversorgung an die Oberleitungsanlage angeschlossen sind.

3. Beleuchtungsanlage (1) nach Anspruch 1 oder 2, wobei jede der Markierungsleuchten (2) zur Abgabe von Lichtsignalen in unterschiedlichen Farben und in unterschiedlichen Betriebsmodi ausgebildet und durch ein Steuergerät ansteuerbar ist.

4. Beleuchtungsanlage (1) nach Anspruch 3, wobei das Steuergerät und die Markierungsleuchten (2) zur Kommunikation über einen Längsleiter (5, 6) der Oberleitungsanlage ausgebildet sind.

## Claims

1. Illumination device (1) for marking a lane (LR) of a roadway (R), comprising a plurality of marker lights (2) arranged along at least one lane separator of the lane (LR), **characterised in that** the at least one lane separator runs above the lane (LR) and the marker lights (2) are arranged overhead on a supporting structure on the roadway side.

2. Illumination device (1) according to claim 1, wherein the supporting structure is formed by brackets (4) of an overhead contact line system for electrifying the lane (LR) for vehicles with current collectors, wherein the marker lights (2) are connected to the overhead contact line system for the purpose of supplying power.

3. Illumination device (1) according to claim 1 or 2, wherein each of the marker lights (2) is embodied to output light signals in different colours and in different modes of operation and can be controlled by a control device.

4. Illumination device (1) according to claim 3, wherein the control device and the marker lights (2) are embodied to communicate via a longitudinal conductor (5, 6) of the overhead contact line system.

## Revendications

1. Installation ( 1 ) d'éclairage pour le marquage d'une voie ( LR ) de circulation d'une chaussée ( R ), comprenant une pluralité de dispositifs d'éclairage ( 2 ) de marquage disposés le long d'au moins une ligne de démarcation de la voie ( LR ) de circulation, **caractérisée en ce que** la au moins une ligne de démarcation s'étend au-dessus de la voie ( LR ) de circulation et les dispositifs d'éclairage ( 2 ) de marquage sont disposés au-dessus de la tête, sur une structure porteuse du côté de la chaussée.

2. Installation ( 1 ) d'éclairage, dans laquelle la structure porteuse est formée par des bras ( 4 ) d'une installation à ligne aérienne pour l'électrification de la voie ( LR ) de circulation pour des véhicules ayant une prise de courant, les dispositifs d'éclairage ( 2 ) de marquage étant raccordés à l'installation à ligne aérienne pour l'alimentation en électricité.

3. Installation ( 1 ) d'éclairage suivant la revendication 1 ou 2, dans laquelle chacun des dispositifs d'éclairage ( 2 ) de marquage est constitué pour émettre des signaux lumineux de couleurs différentes et dans des modes de fonctionnement différents et peut être commandé par un appareil de commande.

4. Installation ( 1 ) d'éclairage suivant la revendication 3, dans laquelle l'appareil de commande et les dispositifs d'éclairage ( 2 ) de marquage sont constitués pour communiquer par une ligne ( 5, 6 ) longitudinale de l'installation à ligne aérienne.
